Europäisches Patentamt

**European Patent Office**

Office européen des brevets

(11) Veröffentlichungsnummer: **0 135 180**
**A2**

(12) **EUROPÄISCHE PATENTANMELDUNG**

(21) Anmeldenummer: **84110481.3**

(22) Anmeldetag: **04.09.84**

(51) Int. Cl.⁴: **A 01 B 73/06**

(30) Priorität: **16.09.83 US 532866**

(43) Veröffentlichungstag der Anmeldung:
**27.03.85 Patentblatt 85/13**

(84) Benannte Vertragsstaaten:
**DE FR GB**

(71) Anmelder: **DEERE & COMPANY**
**1 John Deere Road**
**Moline Illinois 61265(US)**

(72) Erfinder: **Bedney, Harris Ivan**
**3711 - 31st Avenue**
**Rock Island Illinois 61201(US)**

(74) Vertreter: **Feldmann, Bernhard et al,**
**DEERE & COMPANY European Office, Patent**
**Department Steubenstrasse 36-42 Postfach 503**
**D-6800 Mannheim 1(DE)**

(54) **Geräteträger mit mindestens einem Seitenrahmen.**

(57) Ein fahrbarer Geräteträger (8) weist zwei Seitenrahmen (48) mit Arbeitsgeräten (20) auf, die in einer im wesentlichen horizontalen Ebene in eine Transport- oder in eine Arbeitsstellung schwenkbar sind und sowohl in diesen wie auch beim Verschwenken zwischen diesen auf Stützrädern (36) abgestützt sind. Die Stützräder (36) sind über eine Gestänge (54) mit den Seitenrahmen (48) verbunden, das es ihnen erlaubt, weitmöglichst an den Seitenrahmen (48) bzw. die von ihm getragenen Geräte (20) heranzuschwenken, wenn sich die Seitenrahmen (48) in ihrer oder auf dem Weg zu ihrer Transportstellung befinden.

Fig. 6

EP 0 135 180 A2

## Geräteträger mit mindestens einem Seitenrahmen

Die Erfindung betrifft einen Geräteträger mit mindestens einem Seitenrahmen, der in eine Transport- oder in eine Arbeitsstellung horizontal oder etwa horizontal schwenkbar ist und über ein verstellbares Gestänge auf wenigstens einem horizontal schwenkbaren Stützrad abgestützt ist, das sich in der Arbeitsstellung mit Bezug auf die Arbeitsrichtung vor dem Seitenrahmen befindet.

Ein derartiger Geräteträger (US-A-4 236 585) weist eine Deichsel auf, die nahe ihrem rückwärtigen Ende von zwei Laufrädern getragen und an ihrem vorderen Ende an einen Ackerschlepper angehängt ist. Seitlich der Deichsel, und zwar hinter den Laufrädern, greift über jeweils ein vertikales und ein horizontales Lager je ein Seitenrahmen an, der in sich nochmals vertikal verstellbar ist und sich über ein als Parallelogramm ausgebildetes Gestänge auf Stützrädern abstützt, wobei das Gestänge einerseits an einem auf den Seitenrahmen aufgesetzten Halter und andererseits an einem das Stützrad horizontal schwenkbar aufnehmenden Radträger angreift. Das Gestänge greift sowohl an dem Halter wie auch an dem Radträger an jeweils zwei in einer vertikalen Ebene gelegenen horizontalen Achsen schwenkbar an. Zwischen dem Halter und dem Gestänge erstreckt sich ein Hydraulikzylinder, über den das Stützrad mit dem Gestänge und dem Radträger um die Achsen an dem Halter vertikal schwenkbar ist. Die Stützräder werden relativ zu den Seitenrahmen nach unten geschwenkt, um an den Seitenrahmen aufgehängte Bodenbearbeitungswerkzeuge aus dem Boden so weit anzuheben, daß sie problemlos durch den Geräteträger auf einer Straße oder dergleichen transportiert werden können. Für den Transport werden die Seitenrahmen abgestützt auf den Stützrädern nach hinten geschwenkt, so daß der gesamte Geräteträger eine geringere Breite einnimmt. Jedes Stützrad wird in jeder seiner möglichen Stellungen durch eine Unterbrechung des Druckflüssigkeitsflusses zu oder aus dem Hydraulikzylinder gehalten.

Diesem bekannten Geräteträger haftet der Nachteil an, daß beim Ein- oder Ausfahren das Stützrad im wesentlichen in seiner Stellung verbleibt. Ferner führt das Verschwenken der Seitenrahmen nach hinten zu einer Vergrößerung der Gesamtlänge des Geräteträgers in der Transportstellung gegenüber der Arbeitsstellung, die bezüglich der Manövrierbarkeit und der Transportsicherheit des Geräteträgers nicht wünschenswert ist. Die Festsetzung des Gestänges lediglich durch die Unterbrechung des Flüssigkeitsflusses zu oder von dem Hydraulikzylinder ist nicht unbedenklich, da im Falle, daß etwa ein zu dem Hydraulikzylinder führender Hydraulikschlauch platzt, das Stützrad den Seitenrahmen nicht mehr halten kann und die Bodenbearbeitungswerkzeuge auf den Boden aufschlagen. Das über den Seitenrahmen in der Transportstellung nach außen überstehende Gestänge des Stützrades ist schließlich Stößen und sonstigen Belastungen ausgesetzt, die sich während des Rangierens beim Anstoßen an ein Hindernis ergeben können.

Die der Erfindung zugrunde liegende Aufgabe wird darin gesehen, bei einem Geräteträger mit wenigstens einem schwenkbaren Seitenrahmen die Stützräder derart anzuordnen, daß die Breite über alles des Geräteträgers relativ klein gehalten wird.

Diese Aufgabe ist erfindungsgemäß dadurch gelöst worden, daß das Stützrad aus der Stellung vor dem Seitenrahmen durch Verstellen des Gestänges in eine an den Seitenrahmen angrenzende Stellung bringbar ist.

Auf diese Weise werden das Stützrad oder die Stützräder und das Gestänge bestmöglichst in den oder die Seitenrahmen integriert und stehen weder in einem nennenswerten Maß über den oder die Seitenrahmen vor, noch beeinträchtigen sie das Zusammenklappen des oder der Seitenrahmen in der Transportstellung. Diese dem Seitenrahmen naheliegende Stellung kann beispielsweise durch einen Schwenk-, Schiebe- oder Drehmechanismus erreicht werden. Je nach den vorgegebenen räumlichen Bedingungen kann das Stützrad bzw. dessen Radträger an den Seitenrahmen anschlagen oder noch einen geringen Abstand zu diesem halten, also diesem nahe sein. Insbesondere dann, wenn erfindungsgemäß bei einem Geräteträger mit einer sich in Fahrtrichtung erstreckenden Deichsel, die auf mindestens einem Laufrad abgestützt ist und an die beiderseits je ein Seitenrahmen angeschlossen ist, die Seitenrahmen aus der Arbeitsstellung nach vorne in eine Transportstellung beiderseits der Deichsel schwenkbar und mit Bezug auf die Fahrtrichtung vor dem Laufrad an die Deichsel angeschlossen sind, lassen die Stützräder und das Gestänge ein weitestmögliches Zusammenklappen der Seitenrahmen zu. Auch wenn eine Deichsel vorhanden ist, die sich von einem Ackerschlepper aus nach hinten bis zu einem oder mehreren Laufrädern erstreckt, können die Seitenrahmen so nahe wie möglich bis an die Deichsel in der Transportstellung geschwenkt werden. Zwar sind die Maßnahmen nach Anspruch 2 für sich bereits bekannt (US-A-4 319 643), jedoch wurde bisher dann der Geräteträger vorne angehoben, so daß die Stützräder während des Transports ohne Bodenkontakt waren. Zusammen mit den Maßnahmen nach Anspruch 1, wonach die Stützräder während der Schwenkbewegung der Seitenrahmen nach vorne und in der Transportstellung die Seitenrahmen abstützen und beim Verstellen des Gestänges auf die Seitenrahmen zugefahren werden, so daß diese in der Transportstellung relativ dicht an der Deichsel anliegen, wird die Breite über alles des Geräteträgers nicht oder nur unwesentlich vergrößert.

Bei einem Geräteträger, bei dem das Gestänge aus parallel angeordneten Lenkern besteht, die einenends um horizontal angeordnete Achsen an dem Seitenrahmen und anderenends um horizontal angeordnete Achsen an einem Radträger schwenkbar angreifen, wird das Stützrad entsprechend einem weiteren erfinderischen Vorschlag beim Verstellen dadurch nahe an den Seitenrahmen gebracht, daß die beiden dem Seitenrahmen oder die beiden dem Radträger zugeordneten Achsen in einer im wesentlichen horizontalen Ebene liegen, wobei eine Beibehaltung der Lage des Stützrades bei gleichzeitigem Schwenken des Stützrades und des Gestänges an den Seitenrahmen jedenfalls dadurch gemäß der Erfindung erreicht wird, daß die dem Seitenrahmen zugeordneten Achsen und die dem Radträger zugeordneten Achsen jeweils in einer im wesentlichen horizontalen Ebene liegen.

Eine Verringerung des Kraftbedarfs beim Verschwenken des Gestänges und des Stützrades von einer Stellung in die andere wird nach einem weiteren Vorschlag der Erfindung bei einem Geräteträger, bei dem das Gestänge über einen Stellmotor verstellbar ist, dadurch erreicht, daß das Gestänge mit dem Stützrad beim Übergang aus der Stellung vor dem Seitenrahmen in die dem Seitenrahmen benachbarte Stellung durch das Einfahren des Stellmotors eine Labilitätslage durchschreitet, da nach dem Überwinden der Labilitätslage nur noch geringe Kräfte erforderlich sind, um das Gestänge und das Stützrad bis an das Ende ihres Schwenkbereiches zu bringen. Insbesondere bei der Verwendung eines Hydraulikzylinders zur Verstellung des Gestänges ist nach der Überwindung der Labilitätslage gewöhnlich die Zufuhr von Flüssigkeit unter einem mittleren Druck ausreichend, um den Schwenkvorgang zu beenden. Gleichfalls gilt aber auch, daß das Stützrad nicht von einer in die andere Stellung gelangen kann, ohne die Labilitätslage zu überwinden, wozu ein bestimmter Kraftaufwand notwendig ist, so daß ohne äußere Krafteinwirkung eine ungewollte Verstellung aus einer Stellung in die andere nicht möglich ist.

Aus sicherheitstechnischen Gründen ist es vorteilhaft, daß die Bewegung des Gestänges mindestens auf einer Seite der Labilitätslage durch einen Anschlag begrenzt wird. So kann vermieden werden, daß das Stützrad über ein gewolltes Maß hinaus sich von dem Seitenrahmen weg oder auf diesen zubewegt  und Schäden an dem Geräteträger entstehen.

Auf einfache und erfinderische Weise wird eine ungewollte übergroße Schwenkbewegung des Gestänges und somit des Stützrades jenseits der Labilitätslage dadurch vermieden, daß auf jeder Seite der Labilitätslage die Bewegung des Gestänges durch einen Anschlag begrenzt wird, wobei auf der einen Seite der Anschlag von dem Seitenrahmen und auf der anderen Seite durch die Anlage der Lenker gegeneinander gebildet wird.

Ein weiteres Erfindungsmerkmal, wonach das Stützrad in der Transportstellung wenigstens teilweise unter den Seitenrahmen schwenkbar ist, führt zu einer noch geringeren Breite des Seitenrahmens und somit des gesamten Geräteträgers.

Das Stützrad kann bei einem Geräteträger, bei dem das Gestänge über einen Halter an dem Seitenrahmen schwenkbar angreift, vollkommen in den Seitenrahmen integriert werden, wenn außerdem entsprechend der Erfindung in der Transportstellung der Seitenrahmen das Gestänge mit dem Stützrad bis hinter die vorderste Kante des Halters schwenkbar ist, und eine Beschädigung des Gestänges oder des Stützrades, wenn sich der Seitenrahmen in seiner Transportstellung befindet, wird vermieden, da die Halter diese abschirmen. Der Halter steht dabei nach vorne über den Seitenrahmen vor und kann gegebenenfalls beim Verschwenken des Seitenrahmens nach vorne über die Deichsel zu liegen kommen, so daß sich die Transportbreite des Geräteträgers nochmals verringern läßt.

In der Zeichnung ist ein nachfolgend näher beschriebenes Ausführungsbeispiel der Erfindung dargestellt. Es zeigt:

Fig. 1 eine Draufsicht auf einen an einen Ackerschlepper angehängten Geräteträger in einer Arbeitsstellung,

Fig. 2    den Geräteträger nach Fig. 1 in einer Transportstellung,

Fig. 3    eine Seitenansicht des in Fig. 1 gezeigten Geräteträgers,

Fig. 4    eine Seitenansicht des in Fig. 2 abgebildeten Geräteträgers,

Fig. 5    eine Draufsicht auf ein Stützrad des Geräteträgers in vergrößerter Darstellung,

Fig. 6    das Stützrad gemäß Fig. 5 in Seitenansicht.

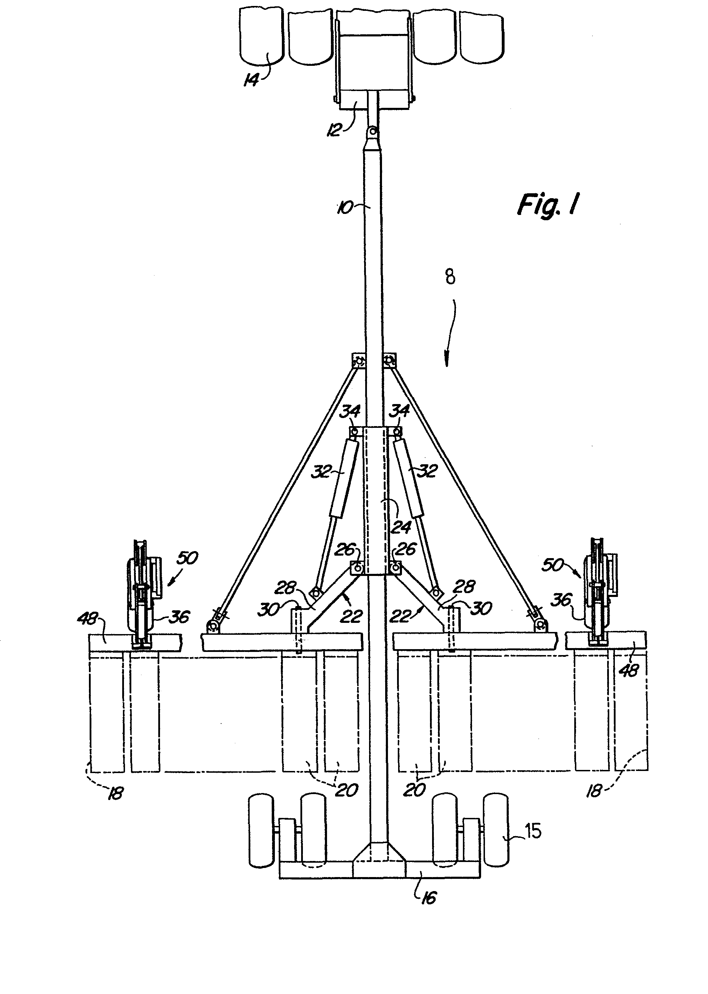

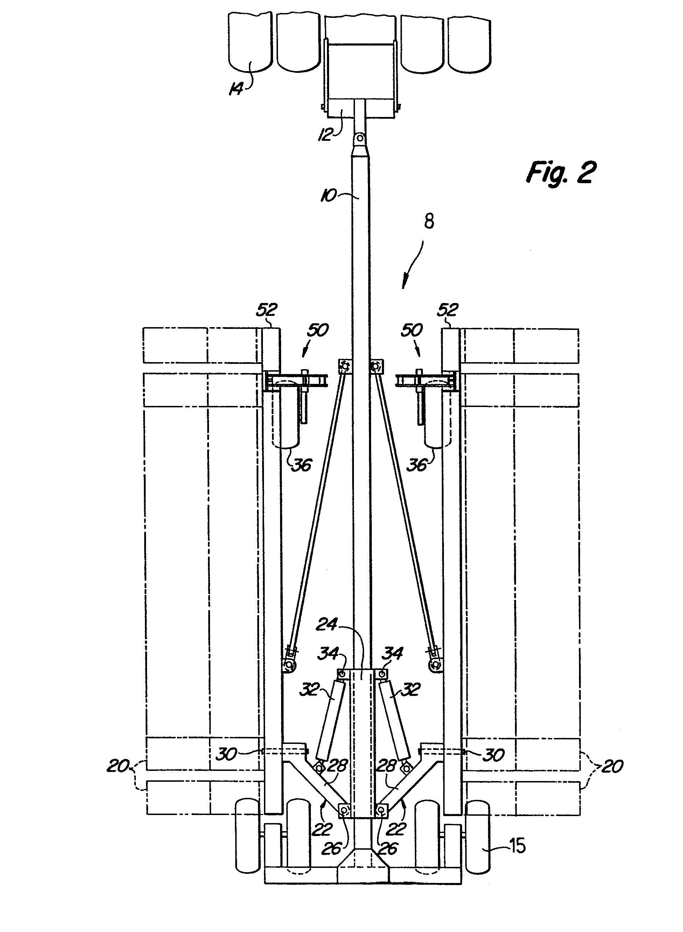

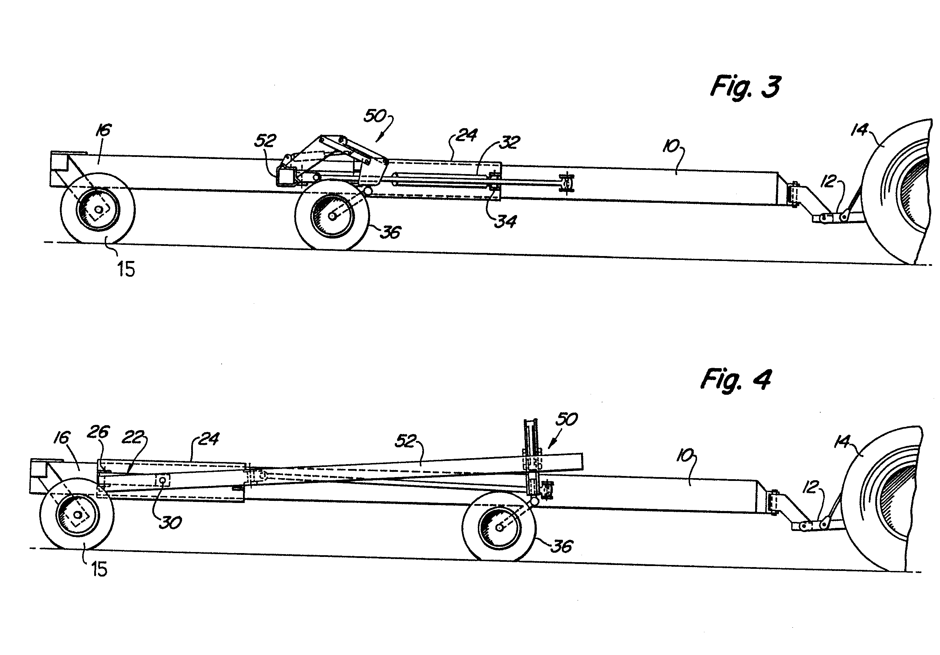

In Fig. 1 ist mit 8 ein Geräteträger bezeichnet, der eine sich längs erstreckende Deichsel 10 zum Anhängen an einen nur teilweise dargestellten Ackerschlepper 14 aufweist, wozu diese vorderenends auf eine Anhängeschiene 12 aufgelegt und mit dieser verbunden ist. Das rückwärtige, also dem Ackerschlepper 14 abgelegene Ende der Deichsel 10 wird von einem von Laufrädern 15 getragenen Wagen oder Fahrgestell 16 getragen. An die Deichsel 10 schließen seitlich jeweils in Vorwärtsfahrtrichtung gesehen ein rechtes und ein linkes Seitenfeld 18 an, die beide zu der Deichsel 10, die gleichzeitig auf der Längsmittenachse des Geräteträgers 8 gelegen ist, in herkömmlicher Weise spiegelbildlich angeordnet und einander gleich sind. Jedes Seitenfeld 18 nimmt eine beträchtliche Länge gemessen quer zur Längsmittenachse des Geräteträgers 8 ein, so daß der Geräteträger 8 ziemlich breit wird, wenn die Seitenfelder ihre in den Figuren 1 und 3 gezeigte Arbeitsstellung einnehmen. Jedes Seitenfeld 18 dient zum Tragen von irgendwelchen Arbeitsgeräten 20 wie Kultivatorwerkzeugen, Schollenbrechern, Düngemittelverteilern, Säeinheiten oder, wie dies in der Zeichnung strichliniert angedeutet ist, von Pflanzeinheiten. Aufgrund der enormen Breite des Geräteträgers 8 in der Arbeitsstellung ist es offensichtlich nicht möglich, diesen Geräteträger 8 auf Straßen zu transportieren oder durch Einfahrten zu manövrieren, und es sind daher Mittel vorgesehen, die Seitenfelder 18 an die sich gegenüberliegenden Seiten der Deichsel 10 heranzuklappen, was, wie dies in Verbindung mit Fig. 2 erkennbar ist, bei diesem Ausführungsbeispiel nach vorne erfolgt.

Um ein derartiges Heranklappen der Seitenfelder 18 an die Deichsel 10 ermöglichen zu können, sind an dem Geräteträger 8 rechte und linke Gelenkverbinder 22 angebracht, um die zugehörigen Seitenfelder 18 mit der Deichsel 10 zu verbinden. Die Gelenkverbinder 22 greifen an einem Längsschlitten 24 an, der auf oder um die Deichsel 10 gebaut ist, und jeder Gelenkverbinder 22 enthält ein Vertikalgelenk 26 zwischen dem Längsschlitten 24 und einem Arm 28, der wiederum ein Horizontalgelenk 30 für die Verbindung mit dem ihm zugehörigen Seitenfeld 18 besitzt. Jedes Vertikalgelenk 26 ermöglicht ein nach vorne oder hinten gerichtetes Schwenken des zugehörigen Seitenfeldes 18 zwischen der Arbeits- und der Transportstellung, und jedes Horizontalgelenk 30 ermöglicht ein vertikales Ausschwenken der Seitenfelder 18, wie sich dies beim Fahren auf unebenem Gelände ergeben kann.

Um die Seitenfelder zwischen ihren beiden Stellungen bewegen zu können, sind kraftbetätigte Mittel vorgesehen, die bei dem bevorzugten Ausführungsbeispiel aus zwischen den Armen 28 und an dem Längsschlitten 24 angeordneten zugehörigen Laschen 34 eingesetzten rechten und linken Hydraulikzylindern 32 bestehen. Aus Fig. 1 ist zu entnehmen, daß die Hydraulikzylinder 32 ausgefahren sind, wenn sich die Seitenfelder 18 in der Arbeitsstellung befinden, wohingegen die Hydraulikzylinder 32 eingefahren sind, wie dies in Fig. 2 dargestellt ist, wenn die Seitenfelder 18 ihre Transport- oder eingeklappte Stellung einnehmen.

Während der Verstellung von der Arbeitsstellung in die Transportstellung oder umgekehrt verändert sich die Länge der Deichsel 10 nicht, und in beiden Stellungen bleibt somit die Entfernung zwischen der Anhängeschiene 12 des Ackerschleppers 14 und dem rückwärtig gelegenen Fahrgestell 16 unverändert. Es ergibt sich aufgrund des langen Hebelarmes, der aus der seitlichen Ausladung der Seitenfelder 18 in bezug auf die Gelenkverbinder 22 resultiert, eine hohe Materialbeanspruchung, der durch eine Abstützung der Seitenfelder 18 auf dem Boden entgegengewirkt werden kann. So sind bei diesem Ausführungsbeispiel jeweils ein rechtes und ein linkes Bodenstützrad 36, die jeweils mit dem rechten bzw. dem linken Seitenfeld 18 verbunden sind, vorgesehen. Jedes Bodenstützrad 36 ist mittels einer Achse 40, einem Arm 42 und mittels einer vertikalen Spindel 44 an einem Radträger oder Träger 38 aufgehängt und wirkt aufgrund seiner Anordnung als Schwenkrad. Dabei ist der Arm 42 mit der Achse 40 und der Spindel 44 starr verbunden, und die Spindel 44 ist in einer Lagerstelle 46 in dem Träger 38 gehalten. Jeder Träger 38 ist auf das zugehörige Seitenfeld über ein Seitenfeldrahmenteil oder einen Tragrahmen 48 aufgesetzt oder mit diesem in sonstiger Weise verbunden. Wenn die Seitenfelder 18 ihre Arbeitsstellung einnehmen, dann ist der Tragrahmen 48 quer zu der Deichsel 10 und vor den Arbeitsgeräten 20 in Vorwärtsfahrtrichtung gesehen angeordnet. Wenn sich die Seitenfelder 18 in ihrer Transportstellung befinden, dann erstrecken sich die Tragrahmen 48 in der Richtung der Deichsel 10 und dicht neben ihr.

Der Unterschied zwischen der Arbeitsstellung und der Transportstellung geht insbesondere aus dem Vergleich der Figuren 1 und 2 hervor.

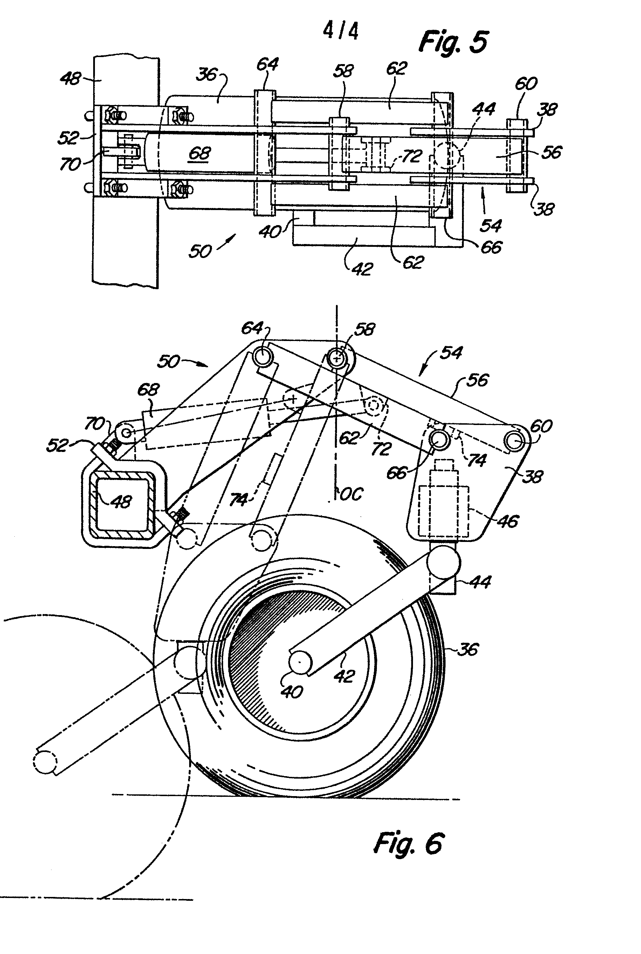

Der Anbau der Träger 38 an den Tragrahmen 48 ist, wie den Figuren 5 und 6 zu entnehmen ist, allgemein mit 50 bezeichnet und beinhaltet einen Halter bzw. eine Konsole 52, die fest an dem Tragrahmen 48 angreift, und ein Gestänge 54, das sich zwischen der Konsole 52 und dem Träger 38 erstreckt. Parallel zueinander in der Art eines Parallelogramms sind ein oberer und ein unterer Lenker 56 und 62 vorgesehen, wobei der obere Lenker 56 in einem Gelenkpunkt 58 um eine horizontale Achse schwenkbar an der Konsole 52 und gleichermaßen an einem Gelenkpunkt 60 an dem Träger 38 angreift, während die unteren Lenker 62 in Gelenkpunkten 64 an der Konsole 52 und in Gelenkpunkten 66 mit dem Träger 38 in Verbindung stehen. Dabei liegen sowohl die Gelenkpunkte 58 und 64 an dem Anbau 50 wie auch die Gelenkpunkte 60 und 66 an dem Träger 38 jeweils in der gleichen horizontalen Ebene, so daß das Bodenstützrad 36 und der Träger 38 jeweils ihre gleiche relative Lage zu dem Tragrahmen 48 während des Schwenkvorganges beibehalten. Unter der Bezeichnung Gelenkpunkte sind in der Praxis selbstverständlich Achsen, um die das Gestänge 54 schwenkt, zu verstehen.

Dieses Gestänge 54 ermöglicht die wahlweise Bewegung des Bodenstützrades 36 und seines Trägers 38 zwischen einer ausgefahrenen und sich vor dem Tragrahmen 48 und der Konsole 52 befindlichen Stellung, wie dies mit den ausgezogenen Linien in Fig. 6 angezeigt ist, und einer zurückgezogenen Stellung hinter der vorderen Stellung und hinter der vordersten Kante der Konsole 52, wie sie mit den strichlinierten Linien in Fig. 6 angegeben ist. Fig. 6 gibt die relative Lageänderung des Tragrahmens 48 zu dem Bodenstützrad 36, dem Träger 38 und dem Gestänge 54 an, so daß sich aus rein zeichnerischen Gründen das Bodenstützrad 36 in der strichlinierten Stellung gegenüber der in vollen Linien gezeigten Stellung nach unten bewegt. In der Praxis wird das Bodenstützrad 36 jedoch auf der gleichen Höhe verbleiben und sich statt dessen der Tragrahmen 48 anheben.

Die ausgefahrene Stellung findet Anwendung in der Arbeitsstellung der Seitenrahmen, um das Bodenstützrad 36 nach vorne zu verlagern und somit die Stabilität des Geräteträgers 8 zu erhöhen und auch um zu vermeiden, daß das Bodenstützrad 36 in Kontakt mit einem der Arbeitsgeräte 20 gelangt. Wenn die Seitenfelder 18 gemeinsam mit ihren Tragrahmen 48 in die Transportstellung bewegt werden, dann kommt der Tragrahmen 48 längs der Deichsel 10 zu liegen, und das Bodenstützrad 36 und der zugehörige Träger 38 sind unter den Tragrahmen 48 zurückgezogen, wie dies strichliniert in Fig. 6 angegeben ist, so daß in der Tat das Bodenstützrad 36 und der Träger 38 von der Deichsel 10 weggezogen werden und daher die Seitenfelder 18 fähig sind, sich sogar noch näher zu der Deichsel 10 hinzubewegen und somit den Geräteträger 8 für den Transport noch schmäler zu machen. In dieser Stellung schwenkt das Bodenstützrad 36 als Schwenkrad derart, daß sich seine Achse 40 quer stellt, und selbst wenn sich das Bodenstützrad 36 unterhalb des Tragrahmens 48 befindet, kommt es nicht in Kollision mit den Arbeitsgeräten 20.

Die Mittel zum wahlweisen Bewegen des Bodenstützrades 36 und des Trägers 38 zwischen deren beiden Endstellungen können etwa die Form eines Hydraulikzylinders 68 einnehmen, der zwischen eine Öse 70 auf der Konsole 52 und eine Öse 72 an dem oberen Lenker 56 des Gestänges 54 eingebaut ist. Wenn der Hydraulikzylinder 68 eingefahren wird, schwenken die Lenker 56 und 62 relativ zu dem Tragrahmen 48 in die strichliniert dargestellte Position gemäß Fig. 6, und ein Labilitätszustand (Linie OC) wird dabei passiert, wobei das Gestänge 54 hinter diese Linie OC gelangt und in der strichliniert dargestellten Stellung zur Anlage an dem Tragrahmen 48 kommt. Im umgekehrten Falle, also wenn das Gestänge 54 zurück in die in durchgezogenen Linien dargestellte Stellung gelangt, trifft der untere Lenker 62 auf einen Anschlag 74, der fest mit dem oberen Lenker 56 verbunden ist und der das Gestänge 54 in einer Stellung vor dem Labilitätszustand festhält. Wie am besten aus Fig. 4 zu erkennen ist, ist das Anheben der Seitenfelder 18 und der zugehörigen Tragrahmen 48, das um die Horizontalgelenke 30 der zugehörigen Gelenkverbinder 22 zu der Deichsel 10 erfolgt, ein Anzeichen für das Zurückziehen des Bodenstützrades 36. Die Beaufschlagung der Hydraulikzylinder 68 mit Druckflüssigkeit erfolgt unabhängig von der der Hydraulikzylinder 32. In der Regel werden zur Verstellung der Seitenfelder 18 aus der Arbeitsstellung in die Transportstellung jedoch zuerst die Hydraulikzylinder 68 und danach die Hydraulikzylinder 32 eingefahren. Jedenfalls ist darauf zu achten, daß die Hydraulikzylinder 68 vollends eingefahren sind, wenn die Seitenfelder 18 ihre Transportposition erreichen.

Demnach stützt jedes Bodenstützrad 36 das zugehörige Seitenfeld 18 in beiden Stellungen und während der Änderung der Stellungen. In der Arbeitsstellung wird eine gewünschte Gewichtsverteilung auf den Ackerschlepper 14, die Bodenstützräder 36 und das Fahrgestell 16 erreicht.

Insbesondere während des Transports, wenn die Seitenfelder 18 durch die Bodenstützräder 36 abgestützt bleiben, wird eine erhöhte Stabilität erreicht. Weiterhin ist in beiden Stellungen die Deichsel 10 von dem Gesamtgewicht der Seitenfelder 18 entlastet.

## Patentansprüche

1. Geräteträger (8) mit mindestens einem Seitenrahmen (48), der in eine Transport- oder in eine Arbeitsstellung horizontal oder etwa horizontal schwenkbar ist und über ein verstellbares Gestänge (54) auf wenigstens einem horizontal schwenkbaren Stützrad (36) abgestützt ist, das sich in der Arbeitsstellung mit Bezug auf die Arbeitsrichtung vor dem Seitenrahmen (48) befindet, dadurch gekennzeichnet, daß das Stützrad (36) aus der Stellung vor dem Seitenrahmen (48) durch Verstellen des Gestänges (54) in eine an den Seitenrahmen (48) angrenzende Stellung bringbar ist.

2. Geräteträger nach Anspruch 1 mit einer sich in Fahrtrichtung erstreckenden Deichsel (10), die auf mindestens einem Laufrad (15) abgestützt ist und an die beiderseits je ein Seitenrahmen (48) angeschlossen ist, dadurch gekennzeichnet, daß die Seitenrahmen (48) aus der Arbeitsstellung nach vorne in eine Transportstellung beiderseits der Deichsel (10) schwenkbar und mit Bezug auf die Fahrtrichtung vor dem Laufrad (15) an die Deichsel (10) angeschlossen sind.

3. Geräteträger nach Anspruch 1 oder 2, wobei das Gestänge (54) aus parallel angeordneten Lenkern (56, 62) besteht, die einenends um horizontal angeordnete Achsen (58, 64) an dem Seitenrahmen (48) und anderenends um horizontal angeordnete Achsen (60, 66) an einem Radträger (38) schwenkbar angreifen, dadurch gekennzeichnet, daß die beiden dem Seitenrahmen (48) oder die beiden dem Radträger (38) zugeordneten Achsen (58, 64 oder 60, 66) in einer im wesentlichen horizontalen Ebene liegen.

4. Geräteträger nach Anspruch 3, dadurch gekennzeichnet, daß die dem Seitenrahmen (48) zugeordneten Achsen (58, 64) und die dem Radträger (38) zugeordneten Achsen (60, 66) jeweils in einer im wesentlichen horizontalen Ebene liegen.

5. Geräteträger nach einem oder mehreren der vorherigen Ansprüche, wobei das Gestänge (54) über einen Stellmotor (68) verstellbar ist, dadurch gekennzeichnet, daß das Gestänge (54) mit dem Stützrad (36) beim Übergang aus der Stellung vor dem Seitenrahmen (48) in die dem Seitenrahmen (48) benachbarte Stellung durch das Einfahren des Stellmotors (68) eine Labilitätslage durchschreitet.

6. Geräteträger nach einem oder mehreren der vorherigen Ansprüche, dadurch gekennzeichnet, daß die Bewegung des Gestänges (54) mindestens auf einer Seite der Labilitätslage durch einen Anschlag (74) begrenzt wird.

7. Geräteträger nach Anspruch 6, dadurch gekennzeichnet, daß auf jeder Seite der Labilitätslage die Bewegung des Gestänges (54) durch einen Anschlag begrenzt wird, wobei auf der einen Seite der Anschlag von dem Seitenrahmen (48) und auf der anderen Seite durch die Anlage der Lenker (62, 56) gegeneinander gebildet wird.

8. Geräteträger nach einem oder mehreren der vorherigen Ansprüche, dadurch gekennzeichnet, daß das Stützrad (36) in der Transportstellung wenigstens teilweise unter den Seitenrahmen (48) schwenkbar ist.

9. Geräteträger nach einem oder mehreren der vorherigen Ansprüche, wobei das Gestänge (54) über einen Halter (52) an dem Seitenrahmen (48) schwenkbar angreift, dadurch gekennzeichnet, daß in der Transportstellung der Seitenrahmen (48) das Gestänge (54) mit dem Stützrad (36) bis hinter die vorderste Kante des Halters (52) schwenkbar ist.

1/4

Fig. 1

2/4

Fig. 2

Fig. 3

Fig. 4

4/4

**Fig. 5**

**Fig. 6**